(19) Europäisches Patentamt
European Patent Office
Office européen des brevets

(11) **EP 2 192 682 B1**

(12) **EUROPÄISCHE PATENTSCHRIFT**

(45) Veröffentlichungstag und Bekanntmachung des Hinweises auf die Patenterteilung:
**17.12.2014 Patentblatt 2014/51**

(51) Int Cl.:
*H02P 6/06* *(2006.01)*        *H02P 6/08* *(2006.01)*
*H02P 21/00* *(2006.01)*

(21) Anmeldenummer: **09014088.0**

(22) Anmeldetag: **11.11.2009**

(54) **Regelung einer permanentmagneterregten synchronen Drehfeldmaschine**

Control of a permanent magnet excited synchronous machine

Contrôle d'une machine synchrone à aimants permanents

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.11.2008 DE 102008059708**

(43) Veröffentlichungstag der Anmeldung:
**02.06.2010 Patentblatt 2010/22**

(73) Patentinhaber: **Lenze Automation GmbH**
**40667 Meerbusch (DE)**

(72) Erfinder:
• **Eutebach, Thomas**
  **31785 Hameln (DE)**
• **Tinebor, Manfred**
  **32683 Barntrup (DE)**
• **Ehlich, Martin**
  **32689 Kalletal (DE)**

(74) Vertreter: **Schober, Mirko**
**Patentanwälte**
**Thielking & Elbertzhagen**
**Gadderbaumer Strasse 14**
**33602 Bielefeld (DE)**

(56) Entgegenhaltungen:
JP-A- 8 275 599        US-A- 4 649 331
US-A- 6 104 159        US-A1- 2006 055 363
US-A1- 2008 001 570

**Beschreibung**

Die Erfindung betrifft ein Verfahren zum feldgeschwächten Betrieb einer permanentmagneterregten, synchronen Drehfeldmaschine sowie einen mit dem erfindungsgemäßen Verfahren betriebenen Umrichter.

Permanentmagneterregte synchrone Drehfeldmaschinen (PMSM) sind aus dem Stand der Technik hinlänglich bekannt. Sie bestehen aus einem Ständer oder Stator, der die Drehfeldwicklung trägt und einem Läufer oder Rotor, der für die magnetische Erregung Dauermagnete trägt. Im Ständer wird daher eine Spannung induziert, wenn der Rotor sich dreht. Wird die Maschine als Motor betrieben, so ist der Läufer belastet und rotiert mit dem Drehfeld des Ständers, wobei Ständer und Läufer um einen Polradwinkel zueinander versetzt sind.

Permanentmagneterregte synchrone Drehfeldmaschinen sind häufig für Servoanwendungen konzipiert und werden dann für Hilfszwecke eingesetzt und zwar häufig als Hilfsantriebe für Arbeitsmaschinen. Solche permanentmagneterregten synchronen Drehfeldmaschinen weisen geringe Trägheitsmomente auf. Erreicht wird die geringe Trägheit durch eine schlanke Bauform. Gegenüber traditionellen Synchronmaschinen ist bei solchen trägheitsarmen Servomotoren das Verhältnis von Durchmesser zu Baulänge klein, so dass sie als Nachteil der schlanken Bauweise relativ große Induktivitäten besitzen. Die Bauart bedingten großen Induktivitäten verursachen einen hohen Blindleistungsbedarf.

Die Maschinen werden allgemein durch Umrichter gespeist, wobei ihre Ständerspannung insbesondere durch Pulsweitenmodulation eingestellt wird. Im Regelfall umfasst der Umrichter einen Zwischenkreis, beispielsweise einen Gleichspannungszwischenkreis, wobei die Zwischenkreisspannung die maximal am Ständer anliegende Ständerspannung begrenzt. Da ein die Maschine speisender Umrichter neben der Wellenleistung der Maschine auch die Blindleistung für die Induktivitäten liefern muss und insbesondere bei besonders trägheitsarmen Servomotoren die Blindleistung im dynamischen Betrieb ein Mehrfaches der Wellenleistung beträgt, hat der hohe Blindleistungsbedarf regelmäßig eine Überdimensionierung des Umrichters zufolge.

Einfache Drehzahlsteuerungen verstellen die Frequenz des Drehspannungssystems an der Ständerwicklung und verändern die Amplitude der Spannung proportional zur Frequenz, damit der magnetische Fluss im Motor und damit das Drehmoment des Motors gleich bleiben. Allerdings steigt mit zunehmender Drehzahl auch die vom Läufer in der Ständerwicklung induzierte Spannung an. Damit der Motor überhaupt einen Strom aufnehmen kann, muss die Höhe der am Ständer anliegenden Ständerspannung größer als die in der Ständerwicklung induzierte Spannung sein. Die Differenz zwischen der Ständerspannung und der in der Ständerwicklung induzierten Spannung ist die Polradspannung. Da sich bei einer solchen Regelung die Rückwirkung auf das Erregerfeld ändert, ist die Regelung qualitativ nicht sehr hochwertig.

Eine weitere Eingriffsmöglichkeit ist über die Erregung selbst gegeben. Allerdings werden Servomotoren aus Ausnutzungsgründen typischerweise an ihrer Sättigungsgrenze betrieben.

Das Erreichen einer höheren Drehzahl ist nur möglich, wenn bei zunehmender Frequenz die Ständerspannung nicht weiter erhöht wird. Der feldschwächende Effekt wird bei der permanentmagneterregten synchronen Drehfeldmaschine durch ein Ständerfeld erzielt, das dem Feld der Permanentmagnete entgegenwirkt. Das schwächende Ständerfeld wird durch eine Ständerstromkomponente erzielt, die bei feldorientierter Regelung durch einen negativen Strom in d-Richtung beschrieben werden kann, wie später noch ausführlicher gezeigt wird.

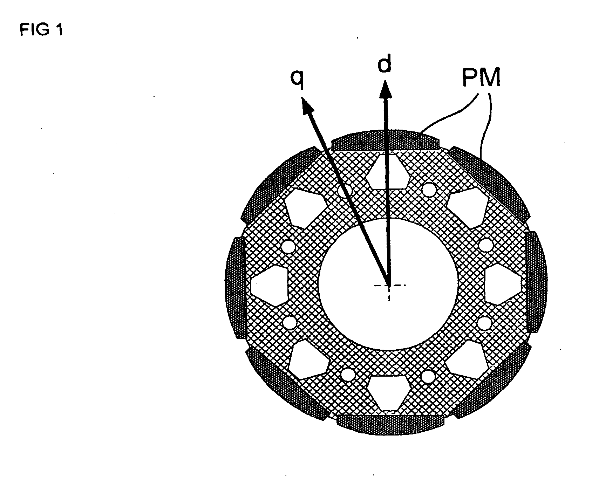

Bei einer feldorientierten beziehungsweise polradorientierten Regelung der Maschine orientiert sich die Regelung an der Lage des Polrades und damit des Erregerfeldes und stellt die Winkellage des Ständerspannungssystems relativ zum Läufer beziehungsweise Polrad ein. Das Gleichungssystem, welches das Verhalten der Synchronmaschine beschreibt, wird dabei nicht unter Zugrundelegung eines durch die Bauart der Maschine gegebenen Ständerkoordinatensystems beschrieben, sondern es wird zur Beschreibung ein Modell mit einem sogenannten d-q-Koordinatensystem zugrunde gelegt. Das d-q-Koordinatensystem ist ein mit der Magnetisierungsrichtung des Polrades umlaufendes Koordinatensystem. Zum Verständnis der Polradorientierung zeigt FIG. 1 den Schnitt durch das Polrad einer modernen permanentmagneterregten synchronen Drehfeldmaschine für dynamische Servoanwendungen. Die Permanentmagnete PM sind außen am Rotor angeordnet. Die Zeiger d und q sind polradorientierte Feldachsen.

In diesem Koordinatensystem liefert die Stromkomponente des d-Zweigs keinen Beitrag zum Drehmoment, so dass die Stromkomponente des q-Zweigs die drehmomentbildende Komponente ist. Hingegen ist die Stromkomponente des d-Zweigs die feldbildende Komponente, da sie in Flußrichtung verläuft. Aufgrund dessen ist das feldorientierte Modell insbesondere hinsichtlich der Drehmomentbildung vorteilhaft überschaubar.

Bei einer solchen Regelung werden bei bekanntem Polradwinkel, der insbesondere mittels eines Polradlagegebers gemessen wird, beispielsweise aus den Sollwerten für Drehmoment und Blindleistung die erforderlichen Ständerstromkomponenten quer und längs zum Erregerfeld ermittelt. Diese werden in das rotierende System transformiert und auf die drei Phasen umgerechnet. Mit den so ermittelten Sollwerten für die Phasen des Ständerstromes sind mittels eines Wechselrichters die Ströme für die Ständerwicklungen einstellbar.

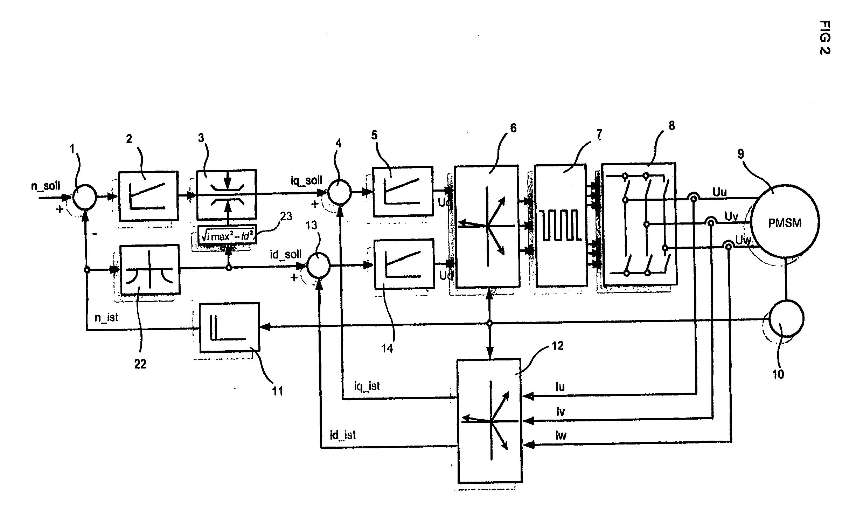

FIG. 2 zeigt eine bekannte Regelstruktur zum polradorientierten Betrieb einer permanentmagneterregten synchronen Drehfeldmaschine. Die permanentmagneterregte synchrone Drehfeldmaschine 9 weist einen Polradlagegeber 10 auf, in der Regel einen Resolver oder einen optischen Winkelgeber wie beispielsweise einen Absolut- oder einen Inkrementalgeber, der den Polradwinkel φp liefert. Mit dem Polradwinkel φp werden die erforderlichen Koordinatentransformationen 6 und 12 durchgeführt.

Durch Differentiation 11 des Polradwinkels φp wird die Rotordrehzahl n_ist gebildet. Diese n_ist wird mit einem Drehzahlsollwert n_soll in einem Vergleicher 1 verglichen. Die Differenz wird einem Drehzahlregler 2 zugeführt, der einen Querstromsollwert iq_soll liefert, welcher durch einen Begrenzer 3 auf einen Maximalwert begrenzt wird. Der Maximalwert ist sinnvollerweise entweder aus der Stromtragfähigkeit des Umrichters oder von der Entmagnetisierungsgrenze der Maschine bestimmt.

Der begrenzte Querstromsollwert iq_soll und der Querstromistwert iq_ist werden in einem weiteren Vergleicher 4 verglichen. Die von diesem Vergleicher 4 ermittelte Regelabweichung wird einem Querstromregler 5 zugeführt. Die Stellgröße des Querstromreglers 5 ist die Querspannung Uq. Diese wird zusammen mit der orthogonalen Längsspannung Ud durch Koordinatentransformation 6 in ein ständerbezogenes Drehfeld transformiert.

Der Modulator 7 erzeugt pulsbreitenmodulierte Signale, die Halbleiterschalter im Wechselrichter 8 derart schalten, dass das durch die Koordinatentransformation 6 vorgegebene Drehfeld mit den Ständerspannungen Uu, Uv und Uw erzeugt wird.

Die Ständerströme der Maschine Iu, Iv und Iw werden über Sensoren erfasst und mittels Koordinatentransformation 12 in das polradorientierte d-q-Koordinatensystem transformiert.

Die Feldschwächung der Maschine wird durch einen Kennlinienbildner 22 vorgenommen. Dabei wird ein Längsstromsollwert id_soll in Abhängigkeit von der Rotordrehzahl n_ist über eine Kennlinie vorgegeben. Ein Längsstromregler 14 bildet aus einem Vergleich 13 des Längsstromsollwertes id_soll mit dem Längsstromistwert id_ist die Längsspannungskomponente Ud als Stellgröße. Sinnvollerweise gibt der Kennlinienbildner im Grunddrehzahlbereich durch den Wert "null" keine Feldschwächung vor.

Erreicht der Betrag der Rotordrehzahl n_ist die vorbestimmte Grenze des Grunddrehzahlbereichs, so gibt der Kennlinienbildner 22 einen negativen Wert für den Längsstromsollwert id_soll vor. Typischerweise ist der Verlauf der Kennlinie so an die Maschine angepasst, dass bei einer Erhöhung der Drehzahl über den Grunddrehzahlbereich hinaus, der Spannungsbedarf der Maschine nicht weiter ansteigt. Die maximal zur Verfügung stehende Spannung ist durch die Maximalspannung des Wechselrichters 8 bestimmt. Bei Umrichtern mit Spannungszwischenkreis ist die maximal mögliche Ständerspannung durch die Höhe der Zwischenkreisspannung begrenzt.

Bei der Anpassung der Kennlinie an die Maschine 9 muss darauf geachtet werden, dass der Querstromregler 5 sowie der Längsstromregler 14 keine Stellbegrenzung erreichen. Würden jeweils die Stellgrößen der Stromregler durch die maximal mögliche Spannung begrenzt, so könnten die Sollstromkomponenten Id, Iq nicht mehr geführt werden und das Verhalten der Maschine würde unbestimmt. Die erforderliche Kennlinie ist jedoch von den Parametern der Maschine und der zur Verfügung stehenden Zwischenkreisspannung abhängig, wobei die Parameter der Maschine temperatur- und sättigungsabhängig sind und wobei die Zwischenkreisspannung belastungs- und netzspannungsabhängig ist. Um ein toleranzbedingtes Erreichen der maximal möglichen Spannung zu vermeiden, müsste die Feldschwächung sicherheitshalber schon bei einem großen Abstand zur Spannungsbegrenzung eingeleitet werden. Damit wäre der Grunddrehzahlbereich der Maschine sehr stark eingeschränkt und das Leistungsvermögen der Maschine könnte nicht ausgenutzt werden.

Aus der Druckschrift EP 0 840 441 B1 ist bekannt, eine aktive Spannungsbegrenzung mit einer Spannungsreserve unterhalb der maximal möglichen Spannung, die Spannungsdecke genannt wird, vorzunehmen. Je nach Betriebszustand der Maschine werden hier bei Erreichen der Spannungsbegrenzung unterschiedliche Einwirkungen auf die Sollkomponenten des Stromvektors vorgeschlagen. So wird bei Erreichen einer ersten Schwelle der Spannungskomponente Ud der Betrag der drehmomentbildenden Stromkomponente Iq mittels eines Begrenzungsreglers verringert. Bei Erreichen einer zweiten Schwelle der Spannungskomponente Uq wird über einen zweiten Begrenzungsregler die feldbildende Stromkomponente Id verkleinert, aber nur, wenn die Spannungskomponente Ud nicht bereits die Spannungsbegrenzung erreicht hat. Ist dies der Fall, wird stattdessen die Verringerung der Stromkomponente Iq vorgeschlagen. Soll die Stromkomponente Iq verringert werden und die Spannungskomponente Uq hat bereits ihren Schwellwert erreicht, so wird wiederum die Verkleinerung der Stromkomponente Id vorgeschlagen, was aber nicht mehr möglich ist, wenn Ud bereits die Spannungsgrenze erreicht hat.

Dieses in EP 0 840 441 B1 aufgezeigte Verfahren führt für statische Anwendungen einer Synchronmaschine zu brauchbaren Ergebnissen. Für dynamische Anwendungen zeigt sich jedoch der gravierende Mangel, dass optimale Betriebspunkte im Feldschwächbereich nur iterativ durch die gegenseitige Veränderung der Strom- und Spannungskomponenten erreicht werden können. Zudem muss bei jeder Veränderung die Reaktion der Maschine abgewartet werden, um den nächsten Iterationsschritt vorzunehmen. In hochdynamischen Anwendungen wird die Spannungsdecke erreicht, bevor die iterative Begrenzung wirken kann. Die Maschine ist dann im Feldschwächbereich nicht kontrollierbar. Für hochdynamische Servoanwendungen ist das Verfahren daher unbrauchbar.

Die Druckschrift EP 1 317 060 A2 offenbart eine Weiterentwicklung des Verfahrens zur Feldschwächung einer Synchronmaschine aus der EP 0 840 441 B1. In der Druckschrift EP 1 317 060 A2 werden auch Reluktanzeffekte der Synchronmaschine in der Regelung berücksichtigt. Es wird dargelegt, dass das iterative Begrenzungsverfahren zu Einschwingzeiten führt. Alternativ wird deshalb auch eine nichtiterative Möglichkeit vorgeschlagen.

Das nichtiterative Verfahren sieht die Drehung des Sollstromes mit einer Kreisfunktion vor. Der Radius des Kreises wird durch den Maximalstrom bestimmt. Für den Drehwinkel sind die Parameter der Maschine maßgebend. Die Aufteilung der Stromkomponenten erfolgt mit den Winkelfunktionen des Kreises.

Zum Verständnis der verschiedenen Betriebsbereiche der PMSM sollen einige Zeigerbilder der Maschine dienen. Zur besseren Übersichtlichkeit sind die ohmschen Spannungsabfälle in den Zeigerbildern vernachlässigt.

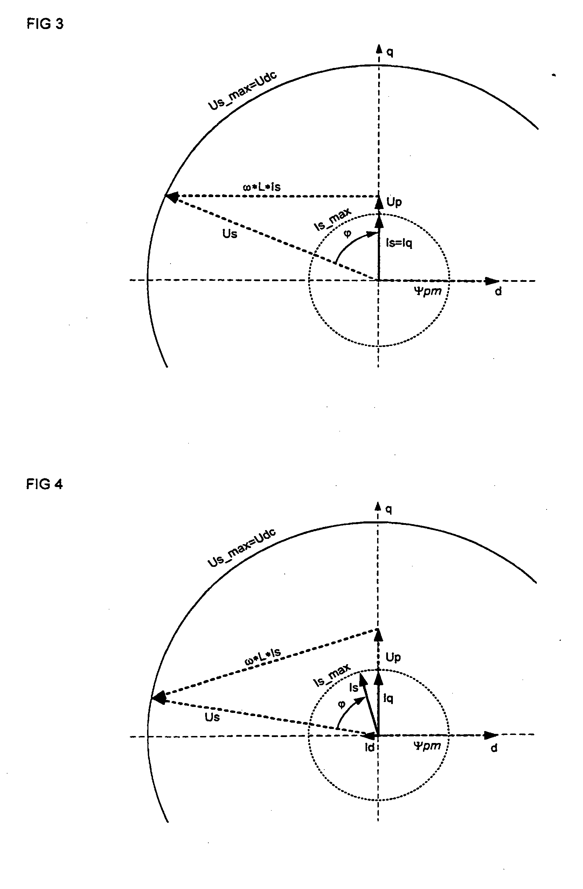

FIG. 3 zeigt das Zeigerbild einer permanentmagneterregten synchronen Drehfeldmaschine bei Erreichen der Spannungsgrenze. Die Spannungsgrenze ist durch den äußeren Kreis dargestellt. Der Kreisradius stellt die maximal erreichbare Ständerspannung Us_max dar, die durch die Zwischenkreisspannung des Umrichters Udc vorgegeben ist.

Die Ständerspannung setzt sich aus orthogonalen Komponenten zusammen: In q-Richtung wirkt die Polradspannung Up und in d-Richtung der induktive Spannungsabfall $\omega *L*/s$. In dem Zeigerbild hat die Ständerspannung Us den Spannungsbegrenzungskreis erreicht.

Der innere Kreis stellt die Strombegrenzung dar, wobei der Kreisradius durch den Maximalstrom Is_max gebildet wird. Im Zeigerbild hat der drehmomentbildende Querstrom Iq gerade den Strombegrenzungskreis erreicht.

Die Maschine befindet sich daher sowohl an der Spannungsgrenze als auch in der Strombegrenzung. Die Grenze des Grunddrehzahlbereiches ist gerade erreicht. Um die Drehzahl der Maschine weiter erhöhen zu können, ist nun eine Feldschwächung erforderlich.

FIG. 4 zeigt das Zeigerbild der permanentmagneterregten synchronen Drehfeldmaschine im feldgeschwächten Betrieb. Die Maschine befindet sich weiterhin sowohl an der Spannungsgrenze als auch in der Strombegrenzung.

Da bei konstantem Erregerstrom die Polradspannung proportional zur Drehzahl der Maschine ist, ist an der Länge des die Polradspannung Up darstellenden Zeigers in FIG. 4 gegenüber der in FIG. 3 zu erkennen, dass die Drehzahl der permanentmagneterregten synchronen Drehfeldmaschine in FIG. 4 höher ist als in FIG. 3. Wie in FIG. 4 gezeigt, wird bei einer Änderung der Phasenlage des Ständerstromes Is auch die Phasenlage des induktiven Spannungsabfalls $\omega*L*/s$ geändert, so dass eine höhere Polradspannung und damit auch die höhere Drehzahl der Maschine möglich ist. Die in FIG. 4 gezeigte Längsstromkomponente Id des Ständerstroms Is wirkt als feldschwächende Komponente.

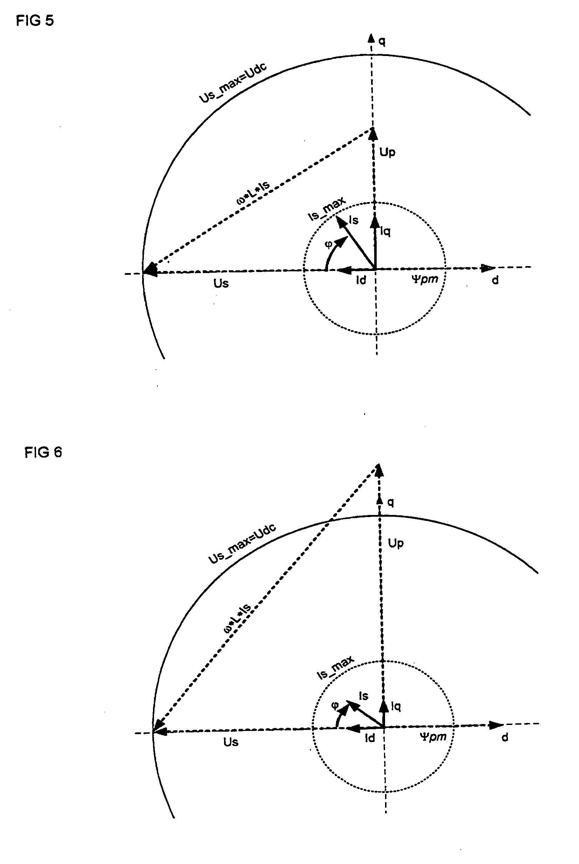

In FIG. 5 ist die Drehzahl der Maschine weiter erhöht. Hierzu ist die Längstromkomponente Id betragsmäßig weiter vergrößert worden. Die Phasenlage des induktiven Spannungsabfalls $\omega*L*/s$ ist dadurch soweit gedreht, dass die Ständerspannung Us nun senkrecht zur Polradspannung Up steht.

In diesem Betriebspunkt ist die Polradspannung $Up = \omega \cdot \Psi pm$ durch den Spannungsabfall an der Ständerinduktivität $\omega \cdot L \cdot Id$ vollständig kompensiert:

$$\omega \cdot \Psi pm + \omega \cdot L \cdot Id = 0$$

Die gesamte Klemmenspannung Us steht jetzt für die drehmomentbildende Stromkomponente Iq zur Verfügung und der Wert des feldschwächenden Stromes hat ein Optimum erreicht.

Würde für eine weitere Drehzahlerhöhung eine weitere Betragserhöhung der Längsstromkomponente Id über den optimalen Wert des feldschwächenden Stromes hinaus erfolgen, würde die treibende Spannung für die drehmomentbildende Stromkomponente Iq wieder verringert. Eine Betragserhöhung der Längsstromkomponente Id über den optimalen Wert des feldschwächenden Stromes hinaus ist somit nicht sinnvoll.

Durch Umformen der oben angeführten Spannungsgleichung lässt sich der optimale Wert für den feldschwächenden Strom id_opt als Verhältnis des Permanentmagnetflusses zur Ständerinduktivität beschreiben:

$$id\_opt = \frac{-\Psi pm}{L}$$

Im stationären Kurzschlussfall der Maschine gilt:

$$\omega \cdot \Psi pm + \omega \cdot L \cdot ik = 0$$

Betragsmäßig entspricht der optimale Wert für den feldschwächenden Strom id_opt daher dem stationären Kurzschlussstrom $ik$:

$$|id\_opt| = |ik|$$

Für eine weitere Drehzahlerhöhung wird daher der Wert des feldschwächenden Stromes id_opt sinnvollerweise gleich dem Wert des Kurzschlussstromes ik beibehalten. Eine weitere Drehzahlerhöhung ist dann nur noch durch Verkleinerung des Ständerstromes Is möglich.

FIG. 6 zeigt das Zeigerbild der permanentmagneterregten synchronen Drehfeldmaschine bei weiter erhöhter Drehzahl. Bei optimaler Feldschwächung ist der Querstrom Iq reduziert worden. Die Drehzahl ist nun so hoch, dass die Polradspannung bereits größer als der Spannungsbegrenzungskreis ist. Wäre die Maschine verlustfrei, könnten somit theoretisch unendlich hohe Drehzahlen erreicht werden. In der Praxis ist die maximale Drehzahl aber durch die mechanisch zulässige Grenzdrehzahl oder durch das Erreichen zerstörend wirkender Polradspannungen limitiert.

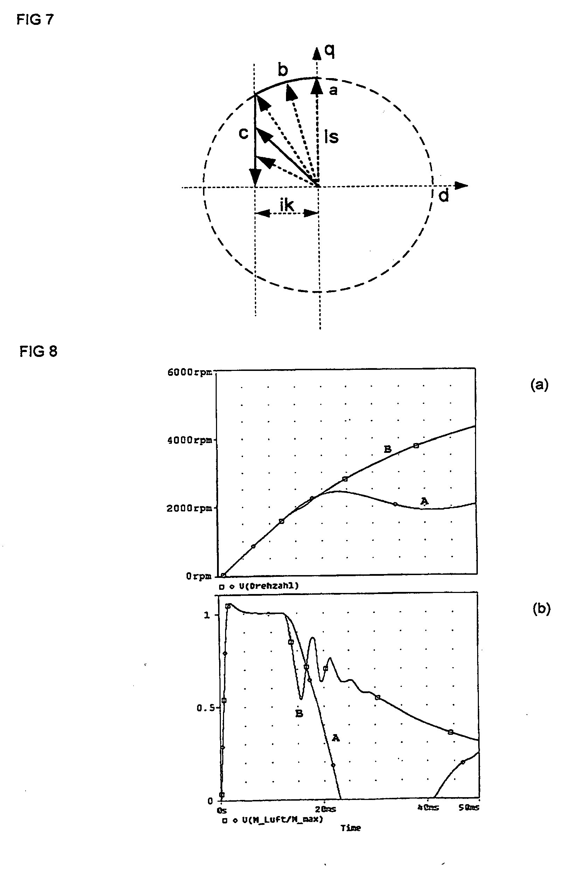

FIG. 7 zeigt den Grenzverlauf der Zeigerspitzen des Ständerstromvektors Is der sich beim langsamen Durchfahren der Betriebsbereiche einstellt. Im Grunddrehzahlbereich zeigt die Zeigerspitze des maximalen Ständerstromes Is_max auf den Punkt a, der durch den Schnittpunkt des Begrenzungskreises mit der q-Achse gegeben ist.

Wird die Spannungsgrenze Us_max erreicht, verläuft die durch die Zeigerspitzen des Ständerstroms gebildete Trajektorie b auf der Kreisbahn des Begrenzungskreises. Wenn die Längsstromkomponente Id den Betrag des Kurzschlussstromes |ik| erreicht hat, wird die Kreisbahn verlassen. Die Trajektorie der Zeigerspitzen verläuft dann auf einer Parallelen c zur q-Achse mit einem Abstand zur q-Achse, der dem Kurzschlussstrombetrag |ik| der Maschine entspricht.

Stationär sind die in den FIG. 3 - 6 dargestellten Betriebsbereiche durch das nichtiterative Verfahren aus EP 1 317 060 A2 einstellbar und bei langsamer Veränderung der Drehzahl folgt der Ständerstrom der Trajektorie wie in FIG. 7 dargestellt.

Werden die Betriebsbereiche jedoch mit einer Beschleunigung durchfahren, wie sie für hochdynamische Servoanwendungen erforderlich ist, kommt es zu Drehmomenteinbrüchen mit Schwingneigung des Drehmoments. Diese festgestellte begrenzte Einsetzbarkeit für Servoantriebe wurde durch simulatorische Untersuchungen in Versuchen bestätigt:

FIG. 8 zeigt den simulierten Hochlauf einer PMSM mit maximal vorgegebenem Querstromsollwert Iq. Der obere Teil des Diagramms FIG. 8(a) zeigt den Hochlauf der Drehzahl über der Zeit. Der untere Teil des Diagramms FIG. 8(b) zeigt den zugehörigen Verlauf des Luftspaltmomentes der Maschine relativ zum maximalen Drehmoment der Maschine über der Zeit.

Der Hochlauf ist sowohl ohne feldschwächende Maßnahmen A als auch mit feldschwächenden Maßnahmen B dargestellt.

A    Beim Drehmomentenverlauf A ohne feldschwächende Maßnahmen wurde der Längsstrom auf dem Wert "null" gehalten.

Ergebnis: Die Maschine beschleunigt und schwingt auf Leerlaufdrehzahl ein. Nach Überschreiten der Leerlaufdrehzahl wird von der Maschine kein antreibendes Drehmoment mehr erzeugt.

B    Beim Drehmomentenverlauf B mit feldschwächenden Maßnahmen wurde die Feldschwächung mit einem negativen Längsstrom Id nach dem in EP 1 317 060 A2 vorgestellten nichtiterativen Verfahren vorgenommen.

Ergebnis: Mit der Feldschwächung wird die Maschine weit über die Leerlaufdrehzahl hinaus beschleunigt. Es werden hohe Drehzahlen erreicht. Beim Übergang vom Grunddrehzahlbereich zum Feldschwächbereich bricht jedoch das Drehmoment temporär zusammen. Beim Eintritt in die Feldschwächung wird sogar weniger Drehmoment erzeugt, als ohne Feldschwächung.

Der Drehmomenteinbruch ergibt sich nur im dynamischen Betrieb und wird größer, je kürzer die Hochlaufzeit der Maschine durch Reduktion der angekuppelten Massenträgheit eingestellt wird. Auch mit der in EP 1 317 060 A2 für das iterative Verfahren vorgeschlagenen Stabilisierung durch Glättung der Stromkomponente Iq kann der dynamisch auftretende Drehmomenteinbruch beim Eintritt in den Feldschwächbereich nicht beeinflusst werden. Es besteht die Gefahr, dass bei dynamischen Servoanwendungen schwingungsfähige Mechanik angeregt wird.

Wesentliche Ursache für den Mangel beim Eintritt in den Feldschwächbereich wird im transienten Erreichen der Spannungsdecke gesehen. Zum dynamischen Aufbau der feldschwächenden Stromkomponente Id benötigen die Stromregler nicht realisierbare Spannungen. Um ein Erreichen der Spannungsdecke zu vermeiden, müssten bei bekannten Verfahren die Ansprechschwellen der aktiven Spannungsgrenze weiter verringert werden. Die Spannungsreserve müsste so groß gehalten werden, dass bei den größten Beschleunigungen die Stromregler die Spannungsdecke transient nicht erreichen. Durch die dann erforderliche große Spannungsreserve wäre der Grunddrehzahlbereich der Maschinen stark eingeschränkt. Damit wäre auch die statische Leistungsausbeute der Maschine reduziert.

Aus der JP 8275599 und der US 2008001570 sind Verfahren zum Betreiben einer Drehfeldmaschine bekannt, bei denen der Betrag des Ständerstroms bei Feldschwächung gegenüber dem maximalen Ständerstrom verändert wird.

Ziel der Erfindung ist es daher, die oben genannten Nachteile der Regelungen für eine permanentmagneterregte synchrone Drehfeldmaschine insbesondere im feldgeschwächten Betrieb zu vermeiden.

Die Erfindung hat somit zur Aufgabe, ein Verfahren zum feldgeschwächten Betrieb einer permanentmagneterregten, synchronen Drehfeldmaschine zu entwickeln, die in hochdynamischen Anwendungen, insbesondere Servoanwendungen, eingesetzt werden kann, wobei sich das Verfahren insbesondere auch für den stabilen Betrieb trägheitsarmer permanentmagneterregter synchroner Drehfeldmaschinen eignen soll.

Eine weitere Aufgabe der Erfindung ist, ein Verfahren zum feldgeschwächten Betrieb einer permanentmagneterregten, synchronen Drehfeldmaschine zu schaffen, welches parameterunempfindlich arbeitet und sich daher insbesondere auch für den Betrieb von permanentmagneterregten synchronen Drehfeldmaschinen mit starken Sättigungseffekten eignet.

Eine weitere Aufgabe der Erfindung ist es, die Blindleistungsaufnahme der Maschine so zu optimieren, dass bei gleicher Wellenleistung ein leistungsschwächerer, kostengünstigerer Umrichter zum Speisen der Drehfeldmaschine verwendbar und die Maschine daher wirtschaftlicher betreibbar ist.

Eine weitere Aufgabe der Erfindung ist es, die verwendbare Drehzahl einer permanentmagneterregten synchronen Drehfeldmaschine für dynamische Anwendungen über den Grunddrehzahlbereich hinaus zu erhöhen.

Die Aufgabe wird gelöst mit einem Verfahren zum feldgeschwächten Betrieb einer permanentmagneterregten synchronen Drehfeldmaschine mit den Merkmalen von Anspruch 1. Hierbei erfolgt eine Feldschwächung durch ein dem Feld des Permanentmagneten entgegen wirkendes Ständermagnetfeld erfolgt, welches durch eine Phasenverschiebung des Ständerstromes bewirkt wird, wobei der Betrag des Ständerstromes im feldgeschwächten Betrieb der Drehfeldmaschine kleiner als der maximale Ständerstrom der Drehfeldmaschine eingestellt wird.

Erfindungsgemäß wird demnach bei einer Phasenverschiebung des Ständerstromes und daher bei einer Drehung des Ständerstromvektors gleichzeitig der Betrag des Ständerstromes verringert und daher der Ständerstromvektor verkürzt. Nach Erreichen sowohl der Spannungsgrenze der am Ständer der Drehfeldmaschine anliegenden Ständerspannung als auch der Stromgrenze des im Ständer der Drehfeldmaschine fließenden Ständerstromes wird daher bei weiterer Erhöhung der Drehzahl im feldgeschwächten Betrieb der Drehfeldmaschine die Stromgrenze durch den Ständerstrom nicht mehr erreicht. Die Verkürzung des Stromvektors schafft den Stromreglern den Spannungsspielraum zum Drehen des Stromvektors. Im Gegensatz zu einem Spielraum, der durch eine höhere statische Spannungsreserve geschaffen wird, geht dieser Spielraum nicht bei höherer Dynamik verloren, denn je dynamischer der Stromvektor gedreht wird, desto schneller wird der Stromvektor verkürzt und desto höher ist der freigegebene Spielraum.

Dabei verläuft in dem polradorientierten Koordinatensystem die Spitze des den Ständerstrom darstellenden Ständerstromvektors im feldgeschwächten Betrieb der Drehfeldmaschine entlang einer elliptischen Trajektorie; wobei die Hauptachse dieser Ellipse auf der q-Achse liegt.

Dieser Verlauf hat sich als vorteilhaft insbesondere in Bezug auf die Drehmomentbildung erwiesen. Denn durch einen solchen Verlauf wird ein starkes Einschwingverhalten des Drehmomentes oder ein Drehmomenteinbruch oder sogar ein nicht kontrollierbares Verhalten der Drehfeldmaschine vorteilhaft vermieden.

Vorzugsweise weist im feldgeschwächten Betrieb der Drehfeldmaschine in dem polradorientierten Koordinatensystem der Ständerstrom eine negative Längsstromkomponente auf. Die Längsstromkomponente ist die feldbildende Komponente des Ständerstromes, durch die ein Statorfeld erzeugt wird, das dem Permanentmagnetfeld entgegenwirkt.

Die negative Längsstromkomponente wird bevorzugt durch Schwenken eines Sollstromvektors für den Ständerstrom erzeugt.

Der gedrehte Sollstromvektor weist die orthogonalen Sollstromkomponenten iq_soll und id_soll auf. Die Sollstromkomponente iq_soll wird gebildet, indem ein vorgegebener Querstromsollwert iq_n mit dem Kosinus des Schwenkwinkels φi multipliziert wird und die Sollstromkomponente id_soll wird gebildet, indem der negative Betrag des Kurzschlussstromes ik mit dem Sinus des Schwenkwinkels φi multipliziert wird:

$$\texttt{iq\_soll = iq\_n * cos (φi)}$$

$$\texttt{id\_soll = -}|ik|\texttt{* sin (φi)}$$

Der Schwenkwinkel φi hat im Grunddrehzahlbereich den Wert "null" und im Feldschwächbereich einen Wert größer "null". Um eine unnötige Reduzierung des Drehmoments im Feldschwächebereich zu verhanden, ist der Schwenkbereich von 0° bis 90° begrenzt.

In einer bevorzugten Ausführungsform wird der Schwenkwinkel des Sollstromvektors durch einen integral wirkenden Regler verstellt.

Dadurch wird der Schwenkwinkel φi des Sollstromvektors in einem geschlossenen Regelkreis geführt und nicht von einer parameterabhängigen Kennlinie abgeleitet oder aus toleranzbehafteten Parametern berechnet. Das Verfahren arbeitet daher sehr parameterunabhängig.

In dem polradorientierten Koordinatensystem ist der Längsradius der elliptischen Trajektorie bevorzugt der Betrag des stationären Kurzschlussstromes der Drehfeldmaschine und der Querradius der elliptischen Trajektorie bevorzugt der drehmomentbildende Sollstrom bei einem Schwenkwinkel von "null" (φi=0).

Bevorzugt ist eine Rückführungsgröße für den integral wirkenden Regler der Aussteuergrad α des Modulators. Besonders bevorzugt vergleicht der integrale Regler die Aussteuerung α des Modulators mit einer maximalen Aussteuerungsschwelle αFS.

Weiterhin bevorzugt wird mittels des Modulators die Ständerspannung der Drehfeldmaschine pulsweitenmoduliert.

Dabei ist bei einer Aussteuerung des Modulators von "null" ($\alpha$=0) die Pulsdauer gleich der Pausedauer, d.h. die erzeugte Ständerspannung ist "null". Bei $\alpha$=1 ist dagegen die maximale Pulsdauer erreicht und die Pausedauer wird "null", so dass bei $\alpha$=1 die maximal mögliche Ständerspannung erreicht ist.

Bevorzugt erhält der integrale Regler als Sollwert die maximale Aussteuerschwelle $\alpha$FS, wobei $\alpha$FS$\leq$1 gewählt wird. Der Istwert ist der Aussteuergrad $\alpha$ des Modulators. Stellgröße des Reglers ist der Schwenkwinkel $\varphi$i. Der integrale Regler dreht den Stromvektor so, dass die Aussteuerung die festgelegte maximale Aussteuerschwelle $\alpha$FS nicht überschreitet.

In einer weiteren bevorzugten Ausführungsform wird als Rückführungsgröße für den integral wirkenden Regler die Zwischenkreisspannung eines die Drehfeldmaschine speisenden Umrichters verwendet.

Diese Ausführungsform nutzt dann nicht den Aussteuergrad des Modulators als Rückführungsgröße. Das Erfassen der Zwischenkreisspannung ist allerdings toleranzbehafteter als die Erfassung der Modulatoraussteuerung.

Die Aufgabe wird weiterhin gelöst mit einem Umrichter zum Antrieb einer permanentmagneterregten synchronen Drehfeldmaschine mit dem erfindungsgemäßen Verfahren.

Mit dem erfindungsgemäßen Umrichter sind permanentmagneterregte synchrone Drehfeldmaschinen in hochdynamischen Anwendungen im feldgeschwächten Betrieb betreibbar.

Im Folgenden wird die Erfindung durch Figuren beschrieben. Die Figuren sind lediglich beispielhaft und grenzen den allgemeinen Erfindungsgedanken nicht ein.

FIG. 9       zeigt das Drehen eines Ständerstromvektors im feldgeschwächten Betrieb,

FIG. 10      zeigt den simulierten Hochlauf einer permanentmagneterregten synchronen Drehfeldmaschine mit einem maximal vorgegebenem Querstromsollwert iq_n,

FIG. 11      zeigt eine Regelstruktur des erfindungsgemäßen Verfahrens.

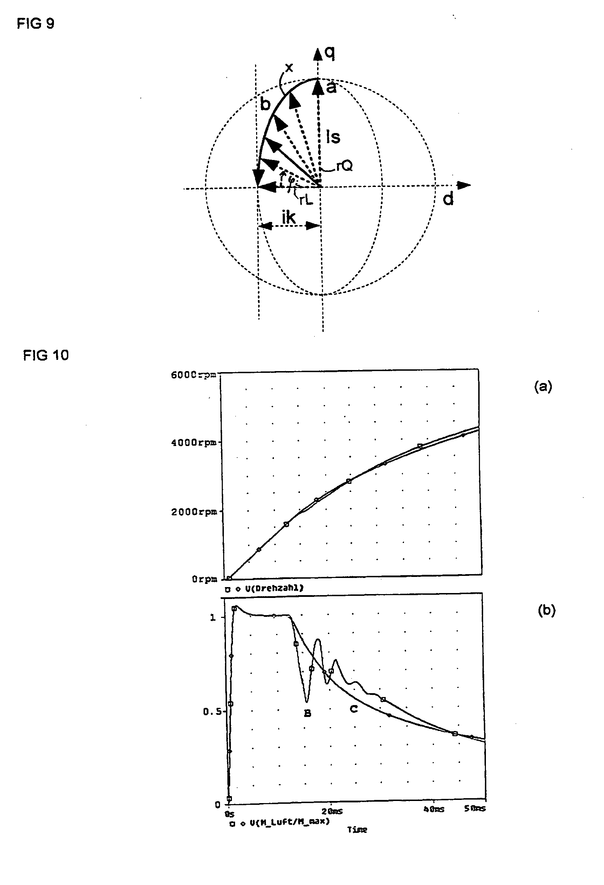

FIG. 9 zeigt das Drehen eines Ständerstromvektors Is im feldgeschwächten Betrieb. Im Grunddrehzahlbereich zeigt die Zeigerspitze des maximalen Ständerstromes Is auf den Punkt a, der durch den Schnittpunkt eines Strombegrenzungskreises mit der q-Achse eines polradorientierten Koordinatensystems gegeben ist. Wird die Spannungsgrenze (s. FIG. 3 -6) erreicht, verläuft die Zeigerspitze des Ständerstroms Is nun nicht, wie vom Stand der Technik bekannt (s. FIG. 7), auf der Kreisbahn des Strombegrenzungskreises. Sondern die Zeigerspitze des Ständerstromes Is wird auf einer elliptischen Trajektorie x geführt. Der Querradius rQ der Ellipse ist dabei gleich dem Betrag des angeforderten Querstromsollwertes iq_n und der Längsradius rL ist gleich dem Kurzschlussstrombetrag |ik| der Maschine.

FIG. 10 zeigt den simulierten Hochlauf einer permanentmagneterregten synchronen Drehfeldmaschine mit maximal vorgegebenem Querstromsollwert iq_n. Der obere Teil des Diagramms Fig. 10(a) zeigt den Hochlauf der Drehzahl über der Zeit. Der untere Teil des Diagramms FIG. 10 (b) zeigt den zugehörigen Verlauf des Luftspaltmomentes der Maschine über der Zeit.

Der in B dargestellte Verlauf entspricht dem in FIG. 8 mit der Bezeichnung B dargestellten Verlauf (s. o.).

C       Der Drehmomentenverlauf C stellt sich ein, wenn eine permanentmagneterregte synchrone Drehfeldmaschine mit dem erfindungsgemäßen Verfahren betrieben wird.

Ergebnis: Mit dem erfindungsgemäßen Verfahren wird die Maschine im feldgeschwächten Betrieb weit über die Nenndrehzahl hinaus beschleunigt. Es werden hohe Drehzahlen erreicht. Der Übergang vom Grunddrehzahlbereich in die Feldschwächung erfolgt harmonisch ohne Drehmomenteinbruch und ohne Schwingneigung.

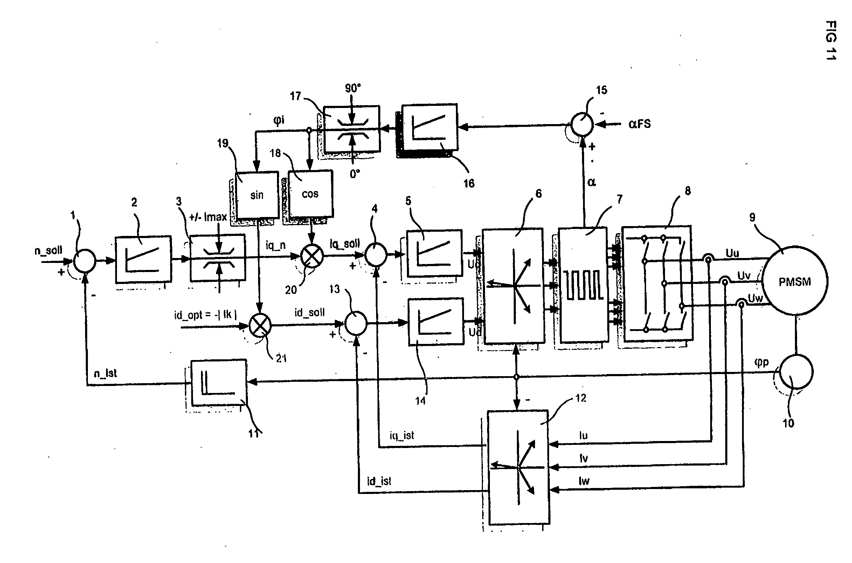

FIG. 11 zeigt eine Regelstruktur des erfindungsgemäßen Verfahrens. Die Realisierung der Regelstruktur ist mittels verschiedener Technologien möglich, beispielsweise durch eine Hardware mit diskreten Bauteilen, ein Softwareprogramm eines Mikrokontrollers, eine programmierte Logik in einem FPGA (field programmable gate array), Kombinationen der genannten Technologien oder weitere dem Fachmann bekannte Technologien.

In FIG. 11 ist eine bekannte Regelstruktur (s. FIG. 2) zum polradorientierten Betrieb einer permanentmagneterregten synchronen Drehfeldmaschine PMSM, 9 durch die Blöcke 15 bis 21 erweitert, mit denen das erfindungsgemäße Verfahren realisiert wird.

Die erfindungsgemäß betriebene permanentmagneterregte synchrone Drehfeldmaschine PMSM, 9 weist einen Polradlagegeber 10 auf, beispielsweise einen Resolver oder einen optischen Winkelgeber, der den Polradwinkel $\varphi$p liefert. Mit dem Polradwinkel $\varphi$p werden die Koordinatentransformationen 6 und 12 vom durch die Bauart der Maschine vorgegebenen ständerorientierten Koordinatensystem in das polradorientierte Koordinatensystem und zurück durchgeführt.

Durch Differentiation 11 des Polradwinkels $\varphi$p wird die tatsächliche Rotor- Istdrehzahl n_ist zum Messzeitpunkt gebildet. Diese Rotor- Istdrehzahl n_ist wird mit dem Drehzahlsollwert n_soll in einem Vergleicher 1 verglichen. Die Differenz wird dem Drehzahlregler 2 zugeführt. Der Drehzahlregler 2 ermittelt mittels der Differenz den gewünschten Querstromsollwert iq_n, der durch den Begrenzer 3 auf einen Maximalwert begrenzt wird. Der Maximalwert ist sinnvollerweise entweder aus der Stromtragfähigkeit des Umrichters oder von der Entmagnetisierungsgrenze der Maschine bestimmt.

Der gewünschte Querstromsollwert iq_n wird dann mittels eines Multiplizierers 20 mit dem Kosinus des Stromvektorwinkels φi multipliziert. Im nicht feldgeschwächten Grunddrehzahlbereich ist der Stromvektorwinkel "null" (φi=0), so dass der gewünschte Querstromsollwert der Querstromsollwert ist iq_soll=iq_n.

Der Querstromsollwert iq_soll und der Querstromistwert iq_ist sind mit einem weiteren Vergleicher 4 verbunden. Die von diesem Vergleicher 4 ermittelte Regelabweichung wird dem Querstromregler 5 zugeführt. Die Stellgröße des Querstromreglers 5 ist die Querspannung Uq.

In der Koordinatentransformation 6 wird die Querspannung Uq zusammen mit der orthogonalen Längsspannung Ud in Spannungen eines ständerbezogenen Koordinatensystems transformiert und dann mittels eines Modulators 7 in pulsbreitenmodulierte Signale gewandelt, die die Halbleiterschalter im Wechselrichter 8 derart schalten, dass das durch die Koordinatentransformation 6 vorgegebene Drehfeld mit den Ständerspannungen Uu, Uv und Uw erzeugt wird.

Die Ständerströme der Maschine Iu, Iv und Iw werden über Sensoren erfasst und mittels Transformation 12 in das polradorientierte d-q-Koordinatensystem transformiert.

Der Längsstromsollwert id_soll wird als Produkt aus dem optimalen Feldschwächestrom id_opt und dem Sinus des Schwenkwinkels φi, der hier auch als Stromvektorwinkel bezeichnet ist, im Multiplizierer 21 gebildet. Im nicht feldgeschwächten Grunddrehzahlbereich ist der Stromvektorwinkel "null" (φi=0), so dass das Produkt id_soll im Grunddrehzahlbereich den Wert null erhält und der Ständerstrom keine Permanentmagnetfeld schwächende Komponente aufweist. Im feldgeschwächten Betrieb ergibt sich für id_soll ein Wert kleiner Null bis maximal id_opt, wobei id_opt eine negative Größe ist. Der Längsstromregler 14 bildet aus dem Vergleich 13 des Längsstromsollwertes id_soll mit dem Längsstromistwert id_ist die Spannungskomponente Ud als Stellgröße. Der Längsstromsollwert id_opt des Ständerstromes entspricht dem stationären Kurzschlussstrom der Maschine id_opt = -|**ik**|.

In der hier gezeigten Ausführungsform wird dem Stromvektorwinkelregler 16 der Vergleich der Modulatoraussteuerung α mit dem Schwellwert αFS zugeführt. Übersteigt die Modulatoraussteuerung α den Schwellwert αFS, erzeugt der Stromvektorwinkelregler 16 als Stellgröße einen Schwenkwinkel φi>0. Der Stellbereich des Stromvektorwinkelreglers 16 ist dabei durch die Begrenzung 17 auf 0° bis 90° begrenzt.

Der Block 19 erzeugt den Sinus des Schwenkwinkels φi und der Block 18 den entsprechenden Kosinus des Schwenkwinkels φi. Indem der Kosinus des Schwenkwinkels φi mit dem gewünschten Querstromsollwert iq_n und der Sinus des Schwenkwinkels φi mit dem optimalen Feldschwächstromsollwert id_opt multipliziert werden, wird die Spitze des Sollstromvektors id_soll auf einer elliptischen Trajektorie x geführt. Der Sollstromvektor id_soll wird durch den Stromvektorwinkelregler 16 dabei soweit geschwenkt, bis der Modulationsgrad α gleich dem vorgegebenem Schwellwert αFS ist.

Mit der in FIG. 11 beschriebenen Regelung ist der Betrieb einer permanentmagnetisch erregten synchronen Drehfeldmaschine im feldgeschwächten Betrieb auch bei hochdynamischen Anwendungen mit einem erweiterten Drehzahlbereich stabil möglich.

## Patentansprüche

1. Verfahren zum feldgeschwächten Betrieb einer umrichtergespeisten permanentmagneterregten synchronen Drehfeldmaschine (PMSM, 9), bei der eine Feldschwächung durch ein dem Feld des Permanentmagneten (PM) entgegen wirkendes Ständermagnetfeld erfolgt, welches durch eine Phasenverschiebung (fi) des Ständerstromes (Is) bewirkt wird, **dadurch gekennzeichnet,** **dass** der Betrag des Ständerstromes (Is) mit Eintritt in den feldgeschwächten Betrieb der Drehfeldmaschine (PMSM, 9) kleiner als der maximale Ständerstrom (Is_max) im nicht feldgeschwächten Betrieb der Drehfeldmaschine (PMSM, 9) eingestellt wird, wobei in dem polradorientierten Koordinatensystem die Spitze des Ständerstromvektors (Is) im feldgeschwächten Betrieb der Drehfeldmaschine (PMSM, 9) entlang einer elliptischen Trajektorie (x) verläuft, deren Ellipsen-Hauptachse auf der q-Achse liegt.

2. Verfahren nach Anspruch 1, **dadurch gekennzeichnet,** **dass** mit Zunahme der Feldschwächung der Betrag des Ständerstroms (Is) stetig verkleinert wird.

3. Verfahren nach einem der vorherigen Ansprüche, **dadurch gekennzeichnet,** **dass** im feldgeschwächten Betrieb der Drehfeldmaschine (PMSM, 9) in dem polradorientierten Koordinatensystem der Ständerstrom (Is) eine negative Längsstromkomponente (Id) aufweist.

4. Verfahren nach einem der vorherigen Ansprüche, **dadurch gekennzeichnet,** **dass** die negative Längsstromkomponente (Id) durch Drehung eines Sollstromvektors für den Ständerstrom Is erzeugt wird.

5. Verfahren nach einem der vorherigen Ansprüche, **dadurch gekennzeichnet,** **dass** der Schwenkwinkel (φi) des Sollstromvektors durch einen integral wirkenden Regler (15 - 21) verstellt wird.

6. Verfahren nach einem der vorherigen Ansprüche, **dadurch gekennzeichnet,**

**dass** in dem polradorientierten Koordinatensystem der Längsradius (rL) der elliptischen Trajektorie (x) der Betrag des stationären Kurzschlussstromes (|*ik*|) der Drehfeldmaschine (PMSM, 9) ist.

7.  Verfahren nach einem der vorherigen Ansprüche, **dadurch gekennzeichnet,** **dass** in dem polradorientierten Koordinatensystem der Querradius (rQ) der elliptischen Trajektorie (x) der drehmomentbildende Sollstrom (iq_soll) bei einem Drehwinkel (φi) von null ist.

8.  Verfahren nach einem der vorherigen Ansprüche, **dadurch gekennzeichnet,** **dass** eine Rückführungsgröße für den integral wirkenden Regler (15 - 21) der Aussteuergrad (α) des Modulators (7) ist.

9.  Verfahren nach einem der vorherigen Ansprüche, **dadurch gekennzeichnet,** **dass** mittels des Modulators (7) die Ständerspannung (Us) der Drehfeldmaschine (PMSM, 9) pulsweitenmoduliert wird.

10. Verfahren nach einem der Ansprüche 1 - 6, **dadurch gekennzeichnet,** **dass** als eine Rückführungsgröße für den integral wirkenden Regler (15 - 21) die Zwischenkreisspannung (Udc) eines die Drehfeldmaschine (PMSM, 9) speisenden Umrichters verwendet wird.

11. Umrichtergespeiste permanentmagneterregte synchrone Drehfeldmaschine (PMSM, 9) mit einem Polrad und daran angeordneten Permanentmagneten (PM), wobei die Drehfeldmaschine im feldgeschwächten Betrieb nach einem Verfahren gemäß einem der vorherigen Ansprüche betreibbar ist.

**Claims**

1.  Method for field-weakened operation of an inverter-supplied permanent magnet excited synchronous machine (9), wherein field weakening is realised by a stator magnetic field counteracting the field of the permanent magnet, wherein the stator magnetic field is brought about by a phase shift (fi) of the stator current (Is), **characterised in that** the value of the stator current (Is) at the start of the field-weakened operation of the machine (9) is set to be lower than the maximum stator current (Is_max) in the non-field-weakened operation of the machine (9), wherein in the magnet wheel orientated coordinate system the peak of the stator current vector (Is) runs, in the field-weakened operation of the machine (9), along an elliptical trajectory (x), of which the major axis of the ellipse lies on the q axis.

2.  Method according to claim 1, **characterised in that** the value of the stator current (Is) is constantly reduced with an increase in the field weakening.

3.  Method according to one of the preceding claims, **characterised in that** in the field-weakened operation of the machine (9), in the magnet wheel orientated coordinate system the stator current (Is) has a negative longitudinal current component (Id).

4.  Method according to one of the preceding claims, **characterised in that** the negative longitudinal current component (Id) is generated by rotating a target current vector for the stator current (Is).

5.  Method according to one of the preceding claims, **characterised in that** the pivot angle (φi) of the target current vector is adjusted by an integrally acting controller (15 - 21).

6.  Method according to one of the preceding claims, **characterised in that** in the magnet wheel orientated coordinate system, the longitudinal radius (rL) of the elliptical trajectory (x) is the amount of the stationary short circuit current (|*ik*|) of the machine (9).

7.  Method according to one of the preceding claims, **characterised in that** in the magnet wheel orientated coordinate system, the transverse radius (rQ) of the elliptical trajectory (x) is the torque-forming target current (iq_soll) at a rotation angle (φi) of zero.

8.  Method according to one of the preceding claims, **characterised in that** a feedback value for the integrally acting controller (15 - 21) is the modulation level (α) of the modulator (7).

9.  Method according to one of the preceding claims, **characterised in that** the stator voltage (Us) of the machine (9) is pulse-width-modulated by means of the modulator (7).

10. Method according to one of the claims 1 - 6, **characterised in that** the intermediate circuit voltage (Udc) of an inverter supplying the machine (9) is used as a feedback value for the integrally acting controller (15 - 21).

11. Inverter-supplied permanent magnet excited synchronous machine (9) with a magnet wheel and permanent magnets arranged thereon, wherein the machine can be operated in the field-weakened operation according to a method according to one of the preceding claims.

**Revendications**

1. Procédé de fonctionnement à champ affaibli d'une machine synchrone à champ tournant (PMSM, 9) à aimants permanents, alimentée par un convertisseur, dans laquelle un affaiblissement de champ est provoqué par un champ magnétique statorique qui, agissant en opposition du champ de l'aimant permanent (PM), est provoqué par un décalage de phases (fi) du courant statorique (Is), **caractérisé en ce que** la valeur du courant statorique (Is), lors de l'entrée en fonctionnement à champ affaibli de la machine à champ tournant (PMSM, 9), est réglé au-dessous du courant statorique maximal (Is_max) en fonctionnement à champ non affaibli de la machine à champ tournant (PMSM, 9), sachant que, dans le système de coordonnées orienté par rapport à la roue polaire, le sommet du vecteur de courant statorique (Is) s'étend, en fonctionnement à champ affaibli de la machine à champ tournant (PMSM, 9), le long d'une trajectoire elliptique (x) dont l'axe elliptique principal est situé sur l'axe q.

2. Procédé selon la revendication 1, **caractérisé en ce que** la valeur du courant statorique (Is) diminue constamment en fonction de l'accroissement de l'affaiblissement de champ.

3. Procédé selon l'une des revendications précédentes, **caractérisé en ce que** le courant statorique (Is) présente une composante de courant longitudinal négative (Id) dans le système de coordonnées orienté par rapport à la roue polaire, en fonctionnement à champ affaibli de la machine à champ tournant (PMSM, 9).

4. Procédé selon l'une des revendications précédentes, **caractérisé en ce que** la composante de courant longitudinal négative (Id) est générée par la rotation d'un vecteur de courant de consigne pour le courant statorique (Is).

5. Procédé selon l'une des revendications précédentes, **caractérisé en ce que** l'angle de pivotement (φi) du vecteur de courant de consigne est régulé par un régulateur à action intégrale (15 - 21).

6. Procédé selon l'une des revendications précédentes, **caractérisé en ce que**, dans le système de coordonnées orienté à la roue polaire, le rayon longitudinal (rL) de la trajectoire elliptique (x) est la valeur du courant de court-circuit stationnaire (|ik|) de la machine à champ tournant (PMSM, 9).

7. Procédé selon l'une des revendications précédentes, **caractérisé en ce que**, dans le système de coordonnées orienté à la roue polaire, le rayon transversal (rQ) de la trajectoire elliptique (x) est le courant de consigne (iq_soll) formant le couple de rotation, à un angle de pivotement (φi) zéro.

8. Procédé selon l'une des revendications précédentes, **caractérisé en ce que** la grandeur de retour pour un régulateur à action intégrale (15 - 21) est le degré de modulation (α) du modulateur (7).

9. Procédé selon l'une des revendications précédentes, **caractérisé en ce que** la tension statorique (Us) de la machine à champ tournant (PMSM, 9) est modulée par largeur d'impulsions au moyen du modulateur (7).

10. Procédé selon l'une des revendications 1 à 6, **caractérisé en ce que**, pour le régulateur à action intégrale (15 - 21), on utilise, comme grandeur de rétroaction, la tension de circuit intermédiaire (Udc) d'un convertisseur qui alimente la machine à champ tournant (PMSM, 9).

11. Machine à champ tournant synchrone (PMSM, 9), alimentée par un convertisseur et excitée par des aimants permanents, avec une roue polaire et des aimants permanents (PM) agencés dans celle-ci, sachant que la machine à champ tournant peut être exploitée en fonctionnement à champ affaibli par un procédé selon l'une des revendications précédentes.

FIG 1

FIG 2

FIG 3

FIG 4

**FIG 5**

**FIG 6**

FIG 7

FIG 8

(a)

□ ◇ U(Drehzahl)

(b)

□ ◇ U(M_Luft/M_max)

Time

FIG 9

FIG 10

(a)

(b)

FIG 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0840441 B1
- EP 1317060 A2
- JP 8275599 B
- US 2008001570 A